# FASCICULE DE BREVET EUROPEEN

(11) **EP 2 256 987 B1**
(45) Date de publication et mention de la délivrance du brevet: **03.12.2014**
(21) Numéro de dépôt: 10157109.9
(22) Date de dépôt: 19.03.2010
(51) Int. Cl.: H04L 9/00, G06F 7/72, G06F 17/10, H04L 9/30

(54) **Protection d'une génération de nombres premiers pour algorithme RSA**
Schutz einer Generation von Primzahlen für RSA-Algorithmus
Protection of a generation of prime numbers for the RSA algorithm

(30) Priorité: 28.05.2009 FR 0953523
(43) Date de publication de la demande: 01.12.2010
(73) Titulaire: PROTON WORLD INTERNATIONAL N.V., 1930 Zaventem (BE); STMicroelectronics (Rousset) SAS, 13790 Rousset (FR)
(72) Inventeur: DAEMEN, Joan, 3900, OVERPELT (BE); CUYPERS, Frank, 1930 ZAVENTEM (BE); VAN ASSCHE, Gilles, 1030 BRUXELLES (BE); LIARDET, Pierre-Yvan, 13790 PEYNIER (FR)
(74) Mandataire: de Beaumont, Michel

(56) Documents cités:
- US-A1- 2002 186 837
- US-A1- 2003 108 193
- US-B1- 7 043 018
- MENEZES, VANSTONE, OORSCHOT: "Handbook of Applied Cryptography" 1997, CRC PRESS LLC , USA , XP000863996 * page 138 - page 140 * * page 285 - page 291 *

## Description

### Domaine de l'invention

La présente invention concerne de façon générale les circuits électroniques et, plus particulièrement, les circuits exécutant des algorithmes de chiffrement asymétriques de type RSA. L'invention concerne plus précisément la protection, lors de la génération de nombres premiers dans un circuit électronique, contre des attaques par canaux cachés (Side Channel Attacks), par exemple par analyse statistique de la consommation du circuit (SPA - Simple Power Analysis) ou de sa signature électromagnétique, ou contre des attaques par injections de fautes.

La présente invention s'applique à tout circuit électronique exploitant un algorithme exploitant une factorisation de nombres premiers et, plus particulièrement, aux cartes à puces.

### Exposé de l'art antérieur

L'algorithme RSA est l'un des algorithmes de chiffrement asymétrique (à clé publique) parmi les plus utilisés. Cet algorithme est utilisé pour chiffrer/déchiffrer des données ou pour signer des données et permettre leur authentification. Il se base sur l'utilisation d'une paire de clés comportant une clé publique et une clé privée. En chiffrement/déchiffrement, la clé publique est utilisée, par un émetteur, pour chiffrer des données à communiquer de façon confidentielle à un récepteur, ce dernier utilisant sa clé privée (ou secrète) pour déchiffrer les données. Pour une authentification, la clé privée est utilisée par l'émetteur pour signer les données alors que la clé publique est utilisée par le récepteur pour authentifier la signature.

La clé publique est une clé accessible de façon relativement large pour permettre à l'émetteur des données chiffrées ou au récepteur des données signées d'exploiter ces données. Par contre, la clé privée est réservée au circuit ayant créé la paire de clés. Le cas échéant, le titulaire de la paire de clés communique directement la clé publique à l'autre partie pour lui permettre de traiter les données.

La génération de la paire de clés publique et privée fait appel à une utilisation de deux nombres "p" et "q", différents et premiers entre eux, de taille relativement importante (typiquement 1024 ou 2048 bits). Le produit de ces nombres premiers représente le module de chiffrement "n". Les nombres p et q sont choisis pour que les nombres p-1 et q-1 soient premiers avec une quantité "e", appelée exposant public, ce dernier étant donc premier avec l'indicatrice d'Euler "ϕ(n)" du produit n (ϕ(n) = (p-1)(q-1)). Il en résulte qu'il existe un entier "d" tel que le produit e*d congrue à 1 modulo ϕ(n). La paire n et e représente la clé publique tandis que la paire n et d représente la clé privée. L'exposant privé d représente l'inverse de l'exposant e, modulo (p-1)(q-1). Les nombres premiers p et q sont présents uniquement dans le circuit contenant la clé privée.

La robustesse de l'algorithme RSA dépend des nombres premiers p et q. Pour "casser" l'algorithme RSA à partir de la clé publique, il faut être en mesure de factoriser le nombre n, donc d'obtenir les nombres premiers p et q. Une fois cette factorisation connue, on peut calculer l'exposant privée d à partir de l'exposant public e (d s'obtient en calculant l'inverse de e modulo (p-1)(q-1)). On considère aujourd'hui qu'en utilisant des modules n de taille suffisamment grande (typiquement de l'ordre de 1500 bits), les algorithmes actuels ne permettent pas, dans un temps raisonnable, de factoriser le nombre n.

Toutefois, l'introduction des nombres p et q dans le circuit électronique ou leur génération par ce circuit est particulièrement critique en terme de sécurité, car leur découverte à ce moment de la vie du circuit par un pirate lui fournit la factorisation du nombre n.

Une première technique de génération des clés RSA consiste à générer ces clés hors du circuit électronique. Les quantités p et q sont introduites dans le circuit électronique dans une phase de personnalisation. Cette technique est insensible à des piratages par injection de fautes dans la mesure où les clés ne sont pas générées par le circuit électronique lui-même.

Une deuxième technique connue consiste à faire générer les nombres premiers par le circuit électronique lui-même dans un environnement sécurisé (en pratique dans une installation protégée, à accès réservé). Cette technique ne pose pas non plus de problème d'attaques lors de la génération des nombres premiers.

Toutefois, de plus en plus souvent, on cherche à ce que les circuits électroniques puissent générer leurs clés RSA hors de ces environnements sécurisés. Cela permet, par exemple, de régénérer de nouvelles clés en cas de répudiation d'une clé précédente (clé supposée piratée). Une telle génération s'effectue, par exemple, lors d'une personnalisation du circuit électronique dans un environnement non sécurisé ou lors d'une première utilisation (par exemple, pour des circuits utilisés pour des calculs de signatures ou des identifiants électroniques). Selon un exemple d'application aux passeports électroniques, on souhaite que la clé soit générée par la puce électronique contenue dans le passeport une fois que celui-ci est dans les mains de son titulaire. Ainsi, cette clé ne peut pas avoir servi au préalable dans une procédure d'authentification du passeport.

L'exposant public e peut être un paramètre du système à clé publique (Public Key Infrastructure - PKI) et est le même pour toutes les clés. Il est, par exemple, introduit dans le circuit électronique lors de sa fabrication (en mémoire morte ROM) ou dans une phase de personnalisation (en mémoire EEPROM).

L'exposant public e peut également être généré par le circuit électronique, par exemple par tirage d'un nombre aléatoire, et être ensuite communiqué aux éléments avec lesquels il doit communiquer.

La clé publique (exposant public et module de chiffrement) est donc soit connue du récepteur (signature) ou de l'émetteur (chiffrement), soit communiquée à celui-ci (à chaque transaction ou une fois pour toute) par le circuit électronique possédant la clé privée. La clé publique doit par ailleurs généralement être certifiée.

La génération de grands nombres premiers est coûteuse en temps et en calcul. En particulier, les tests dits de primalité qui permettent de valider le caractère premier ou non d'un nombre mettent généralement en oeuvre des exponentiations modulaires gourmandes en calcul (par exemple, le test de primalité dit de Miller-Rabin). C'est pourquoi on cherche à n'effectuer ces tests que pour des nombres candidats ayant déjà passé avec succès des tests par rapport à des nombres premiers relativement petits. Ces tests correspondent à des divisions par des nombres premiers relativement petits ou à des comparaisons par rapport à des tables de nombres premiers. Par exemple, on peut effectuer un test de Miller-Rabin avec une petite base (deux par exemple) ou effectuer un calcul de plus grand commun diviseur (par exemple ajouter des octets modulo 255 pour obtenir un résultat inférieur à 255 et calculer ensuite le plus grand commun diviseur de ce résultat avec 255- s'il est différent de 1, on obtient avec un seul test que le nombre n'est pas divisible par les trois facteurs de 255, à savoir 3, 5 et 17).

Lorsque les nombres premiers sont générés par le circuit électronique dans un environnement non sécurisé, le circuit est susceptible de subir des attaques par injection de fautes (perturbation de l'alimentation, attaques laser, etc.) exploitées par analyse des entrée-sorties ou de la consommation du circuit, ou de subir des attaques par canaux cachés (SPA ou DPA - Differential Power Analysis, ou analyse électromagnétique).

Un autre risque lié à la génération des nombres premiers par le circuit électronique est une attaque visant à modifier le nombre finalement sélectionné. Une attaque en fin de test Miller-Rabin peut servir à modifier le nombre pris en compte par l'algorithme. Si l'un des nombres p ou q n'est pas premier, le module de chiffrement n est plus facilement factorisable, ce qui affaiblit la sécurité de l'algorithme RSA.

Le document US-A-2003/0108193 décrit un procédé de génération de nombres premiers destinés à être utilisé dans un système cryptographique et prévoit un test de primalité des nombres candidats.

### Résumé

Il serait souhaitable de protéger la génération de nombres premiers et, par ce biais, la génération des clés d'un algorithme utilisant une factorisation de nombres premiers, lorsque ces nombres sont générés par le circuit électronique exploitant ces clés.

Il serait par ailleurs souhaitable de pouvoir détecter une modification d'un nombre premier fourni par le processus de génération.

Il serait par ailleurs souhaitable de pouvoir masquer la génération des nombres premiers.

Pour atteindre tout ou partie de ces objets ainsi que d'autres, il est prévu un procédé de protection d'une grenération, par un circuit électronique, d'au moins un nombre premier en testant le caractère premier de nombres candidats successifs, comportant :
pour chaque nombre candidat :
   le calcul d'un nombre témoin faisant intervenir au moins un premier nombre aléatoire ; et
   au moins un test de primalité basé sur des calculs d'exponentiation modulaire ; et
   pour un nombre candidat ayant satisfait audit test de primalité :
      un test de cohérence entre le nombre candidat et son nombre témoin.

Selon un mode de réalisation de la présente invention, le nombre témoin est obtenu en soustrayant ou en ajoutant au nombre candidat une quantité dépendant dudit premier nombre aléatoire.

Selon un mode de réalisation de la présente invention, chaque nombre candidat est soumis, avant le test de primalité basé sur des calculs d'exponentiation modulaire, à au moins un test de primalité basé sur une table crible comportant autant d'éléments qu'il existe de nombres premiers entre un premier seuil et un second seuil, un nombre candidat initial étant obtenu en multipliant un nombre quelconque par un premier produit des nombres premiers inférieurs au premier seuil.

Selon un mode de réalisation de la présente invention, le passage d'un nombre candidat au suivant comporte l'ajout, aux nombres candidat et témoin courants, dudit premier produit.

Selon un mode de réalisation de la présente invention, le passage d'un nombre candidat au suivant comporte l'ajout, aux nombres candidat et témoin courants, d'un multiple dudit premier produit, le coefficient multiplicateur étant fonction au moins d'un nombre aléatoire et d'un second produit des nombres premiers compris entre les premier et second seuils.

Selon un mode de réalisation de la présente invention, ledit coefficient multiplicateur est en outre fonction d'un exposant public de l'algorithme RSA.

Selon un mode de réalisation de la présente invention, la table crible est basée sur les nombres témoin.

Selon un mode de réalisation de la présente invention, la table crible est, à chaque nouveau nombre candidat, mise à jour en ajoutant à chacun de ses éléments ledit premier produit, modulo l'élément concerné.

Selon un mode de réalisation de la présente invention, chaque nombre candidat est soumis, avant le test de primalité basé sur des calculs d'exponentiation modulaire, à un test de conformité par rapport à un exposant public de l'algorithme RSA.

Selon un mode de réalisation de la présente invention, le test de primalité basé sur des calculs d'exponentiation modulaire est un test Miller-Rabin.

Il est également prévu un circuit électronique comportant des moyens pour la mise en oeuvre du procédé décrit.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma bloc d'un mode de réalisation d'un circuit intégré du type auquel s'applique à titre d'exemple de la présente invention ;
la figure 2A illustre de façon très schématique un chiffrement au moyen d'un algorithme RSA ;
la figure 2B illustre de façon schématique un déchiffrement au moyen d'un algorithme RSA ;
la figure 3 est un schéma bloc illustrant un système de transmission de données chiffrées ;
la figure 4 est un schéma bloc illustrant des étapes usuelles de génération de nombres premiers au sein d'un circuit électronique mettant en oeuvre un algorithme de type RSA ;
la figure 5 est un schéma bloc représentant des étapes d'un mode de réalisation du procédé de génération d'un nombre premier ; et
la figure 6 représente partiellement, sous forme de blocs, un autre mode de réalisation du procédé de génération d'un nombre premier.

### Description détaillée

Par souci de clarté, de mêmes éléments ont été désignés par de mêmes références aux différentes figures. De plus, seules les étapes et éléments utiles à la compréhension de l'invention ont été représentés et seront décrits. En particulier, l'exploitation faite par le circuit électronique de l'algorithme utilisant les clés basées sur les nombres premiers n'a pas été détaillée, l'invention étant compatible avec toute exploitation usuelle (chiffrement, calcul de signature) des nombres premiers générés.

L'invention sera décrite par la suite en relation avec un exemple d'application à l'algorithme RSA utilisé en chiffrement/déchiffrement. On notera toutefois que l'invention s'applique quelle que soit l'utilisation faite de l'algorithme RSA à partir des nombres premiers générés, en particulier, l'invention s'applique à des signatures RSA. Plus généralement, l'invention s'applique à tout algorithme dont les clés dépendent d'une factorisation de nombre premiers, par exemple, le système de chiffrement dit de Rabin.

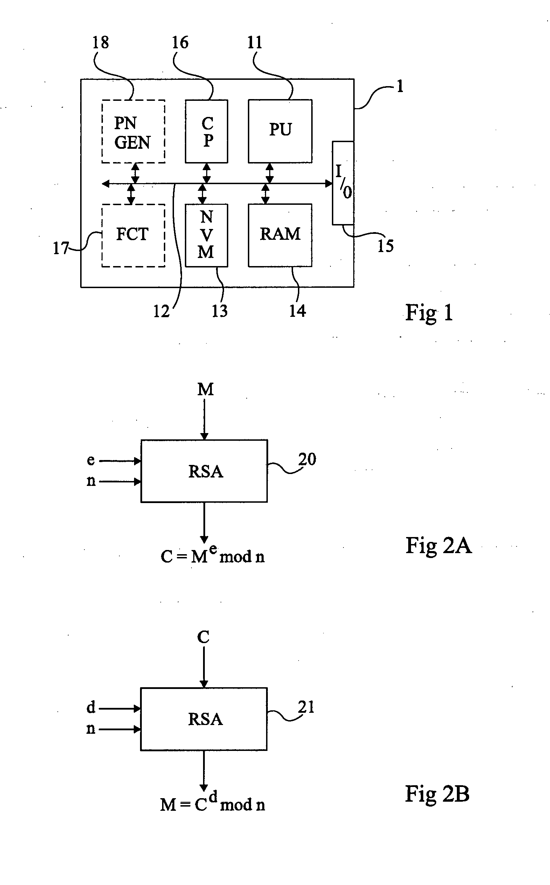

La figure 1 représente, de façon très schématique et sous forme de blocs, un exemple de circuit électronique 1 (par exemple d'une carte à puce) du type auquel s'applique la présente invention. Un tel circuit comporte une unité de traitement 11 (PU), susceptible de communiquer, par l'intermédiaire d'un ou plusieurs bus 12 de données, d'adresses et de commandes, avec différents éléments parmi lesquels une ou plusieurs mémoires non volatiles 13 (NVM), généralement une mémoire ROM contenant tout ou partie des programmes et une mémoire EEPROM destinée à contenir les clés RSA, une ou plusieurs mémoires volatiles 14 (typiquement de type RAM) et des circuits d'interface 15 (I/O) d'entrée-sortie permettant au circuit 1 de communiquer avec l'extérieur. Dans les applications que vise plus particulièrement la présente invention, le circuit 1 comporte également un processeur de chiffrement ou de calcul de signature 16 (CP), le cas échéant confondu avec l'unité centrale 11. Le circuit 1 est susceptible de mettre en oeuvre différentes fonctions réalisées par des éléments matériels et/ou logiciels qui ont été symbolisées par un bloc 17 (FCT) en pointillés. Une de ces fonctions, symbolisée par un bloc 18 (PN GEN), représente la fonction de génération de nombres premiers pour servir de clés d'un algorithme de type RSA. D'autres composants et circuits peuvent équiper le circuit électronique 1 en fonction de sa destination. En outre, des liaisons directes (non représentées) entre certains sous-ensembles du circuit pour échanger des données, adresses et/ou commandes peuvent être prévues.

Les figures 2A et 2B illustrent la mise en oeuvre d'un algorithme de type RSA. La cellule de calcul RSA est symbolisée par un bloc 20 en figure 2A (côté chiffrement) et par un bloc 21 en figure 2B (côté déchiffrement). Ces cellules de calcul peuvent en pratique être identiques, qu'elles soient logicielles ou matérielles.

Le chiffrement d'un message M de données, représenté sous la forme d'un nombre entier, est introduit dans le bloc de calcul RSA qui contient ou reçoit par ailleurs le module de chiffrement n et l'exposant de chiffrement e de la clé publique. Le nombre entier M est inférieur au module de chiffrement n. Le bloc RSA calcule le message chiffré C qui représente l'exponentiation modulaire M^{e} mod n.

Côté déchiffrement par le circuit possédant la clé privée (n, d), le message C est soumis à une exponentiation modulaire sur la base de l'exposant d et du modulo n, c'est-à-dire que la cellule 21 fournit le message M représentant C^{d} mod n.

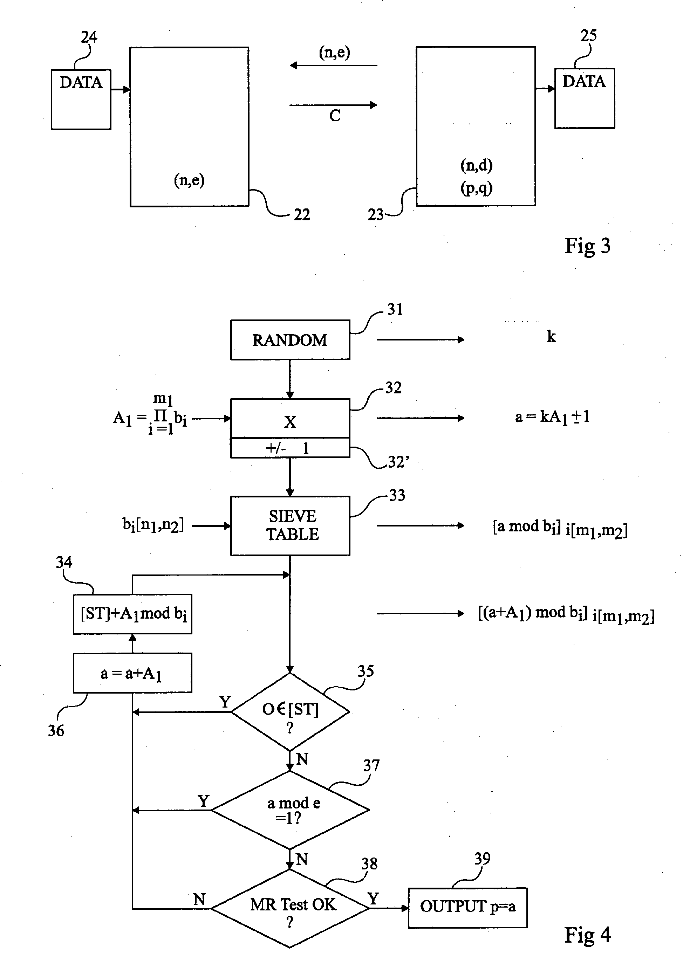

La figure 3 est un schéma bloc illustrant un exemple de transmission de données DATA (bloc 24) représentant un contenu numérique quelconque par un émetteur 22 à destination d'un récepteur 23. Le récepteur dispose des clés RSA et commence, si elle n'est pas connue de l'émetteur, par lui transmettre la clé publique, c'est-à-dire le module de factorisation n et l'exposant public e. Cela permet à l'émetteur de chiffrer les données et de les transmettre sous forme de message chiffré C. Le récepteur 23 utilise sa clé privé (n, d) pour déchiffrer les messages et obtenir les données DATA (bloc 25).

Les transmissions sont susceptibles de subir des tentatives de piratage visant à découvrir la factorisation du nombre n. L'invention ne vise pas ces attaques une fois les clés générées mais les attaques susceptibles d'être introduites lors de la génération des nombres premiers qui intervient une seule fois (ou à chaque génération d'un nouvelle paire de clé).

La génération d'un nombre premier consiste à modifier un nombre candidat jusqu'à ce qu'il soit premier. Comme indiqué précédemment, on effectue des tests simplifiés pour vérifier que le candidat est bien premier avec des nombres relativement petits avant de le soumettre à un test de primalité adapté aux grands nombres. Les tests adaptés aux grands nombres sont généralement basés sur le théorème de Fermat d'après lequel si "u" est un nombre premier, vu-1 est congru à 1 modulo u pour tout entier "v", c'est-à-dire qu'il n'existe pas de factorisation possible du nombre "u" par un entier autre que 1 ou u. Le test de primalité désormais le plus utilisé pour la génération de nombres premiers est le test dit de Miller-Rabin. Ce test met en oeuvre des calculs d'exponentiation modulaire pour vérifier que le candidat n'est pas divisible par un autre nombre que 1 et est décrit, par exemple, dans l'ouvrage "Handbook of Applied Cryptography" de A. Menezes, P. van Oorshchot et S. Vanstone, paru en 1996 (CRC Press), chapitre 4, point 4.2.3, pages 138-140. En fait, les tests de primalité ne sont pas parfaits mais la probabilité d'erreur est suffisamment faible pour que l'on puisse considérer le candidat comme premier.

La figure 4 est un schéma bloc illustrant les étapes d'un procédé de génération usuel d'un nombre premier (noté arbitrairement p), destiné à représenter l'un des deux nombres premiers du module de factorisation RSA. Le procédé de la figure 4 est généralement mis en oeuvre deux fois successivement pour obtenir les nombres p et q.

On commence par sélectionner un nombre quelconque (bloc 31, RANDOM) k, par exemple sous l'effet d'un tirage aléatoire. Puis, on modifie ce nombre de sorte à obtenir un candidat non divisible par les nombres premiers inférieur à un premier seuil n₁.

Selon un exemple, le nombre k est multiplié (bloc 32, X) par le produit A₁ des nombres premiers bi inférieurs au seuil n₁ (i étant compris entre 1 et m₁, où m₁ représente le nombre de nombres premiers de l'ensemble [1, n₁]). Le seuil n₁ est choisi relativement petit. Par exemple, n₁ = 3, A₁ = 6 (m₁ = 3 et b₁ = 1, b₂ = 2, b₃ = 3). Sᵢ/n₁ = 5, A₁ = 30 (m₁ = 4 et b₁ = 1, b₂ = 2, b₃ = 3, b₄ = 5). Puis, on ajoute ou on retranche l'unité (bloc 32', ± 1) au produit calculé pour qu'il ne soit divisible, dans l'exemple où n₁ = 3, ni par 2, ni par 3. On obtient un premier candidat a = k.A₁ ± 1, premier avec les nombres 2 et 3.

La taille souhaitée pour les nombres p et q est fixée. Par conséquent, la taille des candidats a doit correspondre à celle souhaitée pour les nombres p et q. La taille du nombre k dépend donc de celle du nombre A₁. Dans l'exemple ci-dessus, pour un nombre a de 1024 bits et un nombre A₁ de 30, le nombre k est choisi sur 1019 bits.

Selon un autre exemple, le nombre k est modifié en effectuant l'opération k = k-(k mod A₁) pour le rendre divisible par A₁. Puis, on ajoute un nombre que l'on sélectionne arbitrairement dans une table de nombres premiers avec A₁. On obtient alors un candidat a, premier avec les nombres premiers inférieurs à n₁. Dans cet exemple, le nombre k a la même taille que celle souhaitée pour le nombre a.

L'étape suivante (bloc 33) consiste à construire une table crible ST (SIEVE TABLE) dont chacun des termes représente le résultat de la division du candidat a par un des nombres premiers compris entre le premier seuil n₁ et un deuxième seuil n₂ supérieur. Cela revient à remplir la table avec les valeurs a mod bi pour bi compris entre n₁ et n₂ (donc i compris entre m₁ et m₂). Un tel remplissage fait appel à des divisions impliquant le candidat qui sont sensibles à des attaques par canaux cachés. Le seuil n₂ est choisi pour que la table ne soit pas trop importante en taille et pour que les calculs qui seront faits ultérieurement, pour chaque candidat, restent moins gourmands (en temps et énergie requise pour les calculs) qu'un test de Miller-Rabin sur le candidat. Par exemple, le seuil n₂ est égal à 128 ou 256. Pour simplifier les notations, on considère que le seuil n₁ est dans les deux ensembles [1, n₁] et [n₁, n₂] mais, en pratique, il ne sera que dans un seul pour économiser une itération de test car le premier seul n₁ correspond généralement à un nombre premier.

Une fois la table crible initialisée, les opérations suivantes sont effectuées tant que le candidat a ne correspond pas à un nombre premier acceptable pour la mise en oeuvre de l'algorithme RSA.

On commence par vérifier que le candidat est premier avec tous les nombres contenus dans l'intervalle [n₁, n₂]. Cela revient à vérifier (bloc 35, 0 ∈ [ST] ?) que cette table ne contient pas de valeur nulle. La présence d'une valeur nulle signifie que le candidat a est un multiple du nombre premier correspondant de la table.

Si le test 35 confirme (sortie N du bloc 35) que le candidat est premier avec tous les nombres de l'intervalle [n₁, n₂], on vérifie (bloc 37) si le candidat convient pour une mise en oeuvre de l'algorithme RSA. Pour cela, il faut vérifier que le nombre a-1 est premier avec e. En pratique, on regarde si la valeur a mod e (le reste de la division euclidienne de a par e) est égale à 1. Dans la négative, le candidat a est compatible avec le RSA, c'est-à-dire qu'il respectera la condition que l'exposant e est un entier premier avec l'indicatrice d'Euler (p-1) (q-1) .

Une fois le test 37 passé (sortie N), le candidat est finalement soumis à plusieurs exécutions (généralement de quelques exécutions à quelques dizaines d'exécutions) d'un test de primalité de Miller-Rabin (bloc 38, MR tests OK ?). S'il satisfait à ce test (sortie Y du bloc 38), le candidat a est fourni (bloc 39, OUTPUT p=a) en tant que nombre premier p.

Dès qu'un des tests 35, 37 ou 38 indique que le candidat ne convient pas (sorties Y des blocs 35 et 37 ou N du bloc 38), un nouveau candidat est choisi. Pour cela, on commence (bloc 36, a = a+ A₁) par ajouter la valeur A₁ au candidat refusé. Puis, on met à jour la table crible [ST]. Cela revient à ajouter (bloc 34, [ST]+A1 mod bi) la quantité A₁ modulo bi à chacun des éléments (identifiés par i) de la table et le procédé revient à l'étape 35. Bien que cela n'ait pas été représenté, on met également à jour une variable contenant la valeur a mod e qui servira ensuite au test 37.

Une fois un premier nombre premier p obtenu, le procédé est mis en oeuvre de nouveau pour sélectionner le deuxième nombre premier q nécessaire à la mise en oeuvre de l'algorithme RSA. Une étape supplémentaire est alors de s'assurer que les nombres p et q sont premiers entre eux (étape non illustrée en figure 4). Comme il s'agit de nombres premiers, il suffit de vérifier qu'ils sont différents.

La succession des étapes de génération des nombres premiers est particulièrement sensible aux attaques par canaux cachés ou par injection de fautes. De telles attaques peuvent avoir pour objectif de découvrir le nombre premier généré ou de forcer la génération d'un nombre non premier. Dans les deux cas, cela peut permettre à un pirate de découvrir la clé privée.

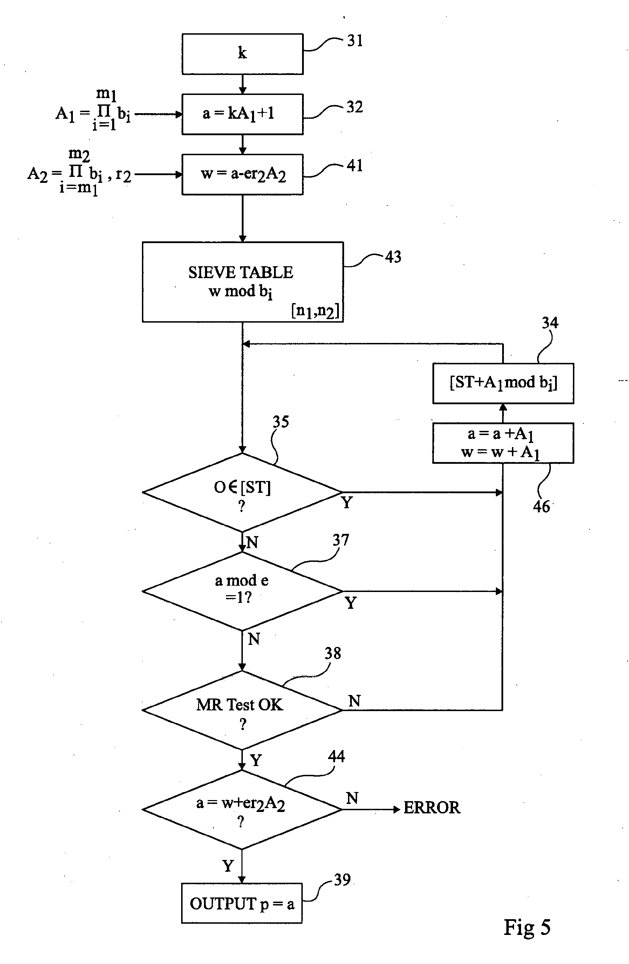

La figure 5 est un schéma bloc illustrant un mode de réalisation du procédé de génération de nombres premiers, protégé contre d'éventuelles attaques par canaux cachés (analyse de la consommation ou analyse de la réponse électromagnétique) ou par injection de fautes. Ce schéma bloc est à rapprocher de celui de la figure 4.

Comme précédemment, on commence par choisir un seuil n1 conditionnant un produit A₁ utilisé dans les tests de primalité. Par exemple, le seuil n₁ vaut 3 (m₁ = 3) ou 5 (m₁ = 4) et le produit A₁ vaut 6 ou 30. D'autres valeurs de n₁ pourront être choisies.

Puis (bloc 31, a), on tire un nombre quelconque k que l'on modifie pour le rendre non divisible par les nombres premiers inférieurs au seuil n₁. Comme précédemment, la taille du nombre k dépend donc de celle du nombre A₁. Par exemple (bloc 32, a = k.A₁+1), le nombre k est multiplié par le produit A₁ et additionné à 1 (en variante, 1 est soustrait à ce résultat). D'autres façons de générer le premier candidat a peuvent être utilisées.

L'étape suivante (bloc 41, w = a-e.r₂·A₂) consiste à générer un nombre témoin w qui sera utilisé en fin du processus de génération pour s'assurer que le candidat a n'a pas été perturbé et pour protéger les divisions par les petits nombres premiers contre des attaques par canaux cachés.

La quantité w est obtenue, par exemple, en retranchant, au candidat a, la valeur e.r₂.A₂, où e représente l'exposant public (par exemple, sur 32 ou 64 bits), où r₂ représente un nombre aléatoire et où A₂ représente le produit des nombres premiers dans un intervalle [n₁, n₂]. Le seuil n₂ représente, comme précédemment, un seuil utilisé ultérieurement pour la création d'une table crible. Par exemple, le seuil n₂ est choisi égal à 128 ou 256. D'autres valeurs de n₂ pourront être choisies.

La taille du nombre aléatoire r2 est égale à la taille du candidat a, diminuée de la taille de l'exposant public e et de la taille du produit A₂. Ainsi, le terme soustrait a la même taille que le nombre a.

Ce mode de réalisation s'applique donc au cas où l'exposant public e est de taille relativement petite (inférieure à une centaine de bits). L'invention s'applique toutefois également à des nombre e plus grands (par exemple de la même taille que les nombre premiers à générer). Dans ce cas (non représenté), le nombre e n'est pas pris en compte dans les tests de primalité qui précèdent le test de Miller-Rabin et son caractère premier avec le candidat sélectionné est vérifié à l'issue de ce test par un test spécifique (par division).

Par la suite, on supposera que le nombre e est suffisamment petit pour être pris en compte dans la génération des nombres p et q, ce qui évite un test de primalité complet sur le nombre e.

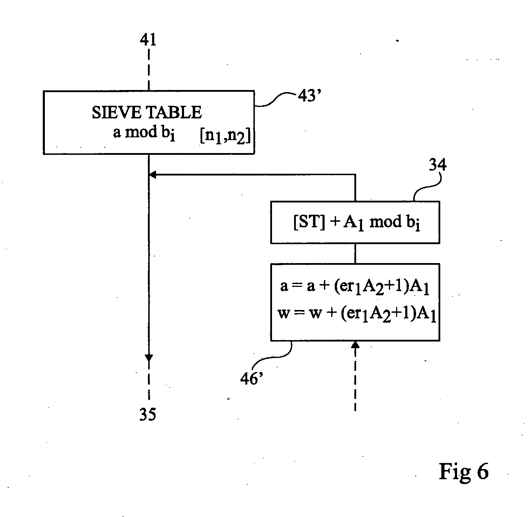

L'étape (bloc 43) suivant la génération du nombre w consiste à générer la table crible [ST] à partir du témoin w. On verra en relation avec la figure 6 que la table crible peut également être générée à partir du candidat a.

Dans le mode de réalisation de la figure 5, la table [ST] comporte autant d'éléments qu'il y a de nombres premiers bᵢ dans l'intervalle [n₁, n₂]. Chaque élément correspond à la division du témoin w par le nombre premier bi correspondant et est égal à a mod bᵢ. Le fait que la quantité w soit créée en retranchant un multiple des quantités e et A₂ au nombre a permet que les valeurs de la table crible représentent à la fois le résultat w mod bi et a mod bᵢ.

Puis, on effectue de façon itérative tant qu'un candidat acceptable n'est pas trouvé les étapes suivantes.

On commence (bloc 35) par s'assurer que les nombres a et w sont premiers avec tous les nombres premiers bᵢ de l'intervalle [n₁, n₂]. Pour cela, on vérifie si l'un des éléments de la table [ST] est nul. Dans la négative, on passe au test suivant (bloc 37, a mod e = 1 ?) pour vérifier la compatibilité du candidat avec l'exposant public e.

Si un candidat a passé tous les tests précédents (sortie N du bloc 37), il est soumis au test de Miller-Rabin (bloc 38).

Dès qu'un des tests 35, 37 ou 38 indique que le candidat ne convient pas, (sorties Y des blocs 35, 37 ou N du bloc 38), un nouveau candidat et un nouveau témoin sont calculés (bloc 46, a = a + A₁, w = w + A₁), en ajoutant, aux valeurs précédentes, la valeur A₁. Puis (bloc 34, [ST] + A₁ mod bᵢ), on met à jour la table crible [ST] en ajoutant la valeur A₁ à tous ses éléments modulo bᵢ. En pratique, on met également à jour une variable contenant la valeur a mod e (donc servant au test 37) en a mod e+ A₁.

Le nouveau candidat est alors soumis aux tests 35 et 37, 38 (l'ordre des tests 35 et 37 n'a pas d'importance).

Si le candidat est acceptable (sortie Y du bloc 38), une étape additionnelle (bloc 44, a = w + e.r₂.A₂ ?) permet de vérifier l'intégrité du candidat par rapport au début du calcul, c'est-à-dire sa cohérence avec le témoin w. Par exemple, on ajoute au témoin w la valeur e.r₂.A₂ et on vérifie que le résultat est égal au candidat a. Dans l'affirmative (sortie Y du bloc 44), le candidat a est fourni (bloc 39, OUTPUT p=a) en tant que nombre premier p. Sinon (sortie N du bloc 44), cela signifie qu'une perturbation est intervenue dans la génération du nombre premier. Le circuit passe alors en traitement d'erreur (ERROR). En variante, le test du bloc 44 vérifie que la quantité A₂ divise la valeur a-w. Une telle variante permet d'éviter de mémoriser la quantité aléatoire r₂. Selon une autre variante, l'étape 41 est remplacée par une addition et l'étape 44 par une soustraction.

Le traitement d'erreur est, par exemple, l'annulation du nombre premier généré (on redémarre le processus de l'étape 31) ou une invalidation du circuit. De telles actions à prendre en cas de détection d'une tentative de piratage sont en elle-même classiques et de multiples solutions existent selon les applications.

Le test de cohérence ou d'intégrité 44 permet d'éviter une attaque imposant un nombre différent du nombre a, après le test de Miller-Rabin.

Une fois qu'un premier nombre premier p a été généré, le processus est repris pour générer un deuxième nombre premier q en vérifiant que les nombre p et q soient premiers entre eux. Enfin, pour la mise en oeuvre de l'algorithme RSA, le module de factorisation n est calculé (n =p.q) et est transmis (avec l'exposant e) pour constituer la clé publique à toute entité susceptible d'en avoir besoin. Les nombres p et q sont stockés uniquement dans le circuit électronique 1.

Le fait de construire la table crible sur la base du nombre témoin w (au lieu du nombre a) permet de masquer cette construction.

La figure 6 est un schéma-bloc illustrant un autre mode de réalisation. Seules les étapes modifiées par rapport à la figure 5 sont représentés.

Par rapport au mode de réalisation précédent, la table crible est basée sur le nombre candidat a. Elle est donc initialisée (bloc 43', SIEVE TABLE, a mod bᵢ[_{n1, n2}] ) par les termes a mod bᵢ de l'intervalle [n₁, n₂]. Pour préserver une mise à jour de la table crible par l'ajout de la quantité A₁, on construit une quantité f à ajouter d'un candidat au candidat suivant et d'un témoin au témoin suivant (bloc 46') de sorte que cette quantité f soit égale à A₁ mod bᵢ et à A₁ mod e. Par exemple, on tire un nombre aléatoire r₁, choisi indépendamment du nombre r₂, et on le multiplie par le produit e.A₂. La taille du nombre r₁ est telle que la taille du produit r₁.e.A₂ est inférieure (de quelques octets à quelques dizaines d'octets) à la longueur requise pour le nombre premier à générer. Cela permet que le passage d'un candidat à un autre s'accompagne d'une modification d'un grand nombre des bits. Puis, on ajoute au produit l'unité 1. Ainsi, comme l'illustre la figure 6, on obtient un nouveau candidat et un nouveau témoin en ajoutant (bloc 46) aux valeurs précédentes, la valeur f.A₁ avec f=e. r₁.A₂+ 1. Les nouveaux candidat et témoin restent premiers avec les nombres premiers inférieurs au seuil n₁. Comme A₂ est égal à 0 modulo bᵢ, le produit (e.r₁.A₂+1) est égal à 1 mod bᵢ. La mise à jour de la table (bloc 34) peut donc être effectuée, comme dans le mode de réalisation précédent en ajoutant, à chacun des éléments de la table [ST] modulo le nombre premier bi de l'élément concerné, la valeur A₁.

Divers modes de réalisation avec diverses variantes ont été décrits ci-dessus. On notera que l'homme de l'art pourra combiner divers éléments de ces divers modes de réalisation et variantes sans faire preuve d'activité inventive. De plus, la mise en oeuvre pratique de l'invention à partir des indications fonctionnelles données ci-dessus est à la portée de l'homme du métier, que ce soit pour une implémentation matérielle ou logicielle.

En particulier, le choix des seuils n₁ et n₂ utilisés pour les tests précédant le test de Miller-Rabin dépend de l'application et du temps que l'on peut consacrer au test de Miller-Rabin lors de la génération des nombres premiers. Par exemple, bien qu'il soit préférable que la table crible ne soit pas basée sur les nombres premiers inférieurs au premier seuil pour économiser des calculs, ce n'est pas indispensable.

De plus, le choix des tailles des quantités aléatoires est adapté en fonction des tailles souhaitées pour les nombres premiers p et q, donc pour le modulo n des exponentiations modulaires de l'algorithme RSA.

En outre, bien que l'invention ait été décrite en relation avec un procédé mettant en oeuvre une seule table crible, on peut envisager d'utiliser plusieurs tables cribles en intercalant le test de primalité (étapes 34 et 35) de chaque table avant la table suivante, chaque table ayant pour rôle de vérifier la primalité du nombre candidat par rapport à des nombres premiers compris dans des plages contigües définies par des seuils successifs. Une telle variante peut servir, dans un souci d'optimisation, à ne mettre à jour une table que si le test de primalité basé sur la table précédente est validé.

## Revendications

1. Procédé de protection d'une génération, par un
circuit électronique (1), d'au moins un nombre premier p en testant le caractère premier de nombres candidats a successifs, comportant :
pour chaque nombre candidat :
le calcul (41, 46) d'un nombre témoin w faisant intervenir au moins un premier nombre aléatoire r₂ ; et
au moins un test de primalité (38) basé sur des calculs d'exponentiation modulaire ; et
pour un nombre candidat ayant satisfait audit test de primalité :
un test de cohérence (44) entre le nombre candidat et son nombre témoin pour vérifier l'intégrité du candidat par rapport au début du calcul.

2. Procédé selon la revendication 1, dans lequel le nombre témoin w est obtenu en soustrayant ou en ajoutant au nombre candidat a une quantité dépendant dudit premier nombre aléatoire r₂.

3. Procédé selon la revendication 2, dans lequel chaque nombre candidat est soumis, avant le test de primalité basé sur des calculs d'exponentiation modulaire, à au moins un test de primalité basé sur une table crible [ST] comportant autant d'éléments qu'il existe de nombres premiers bᵢ entre un premier seuil n₁ et un second seuil n₂, un nombre candidat initial étant obtenu en multipliant un nombre quelconque k par un premier produit A₁ des nombres premiers inférieurs au premier seuil.

4. Procédé selon la revendication 3, dans lequel le passage d'un nombre candidat au suivant comporte l'ajout (46), aux nombres candidat et témoin courants, dudit premier produit
A₁.

5. Procédé selon la revendication 3, dans lequel le passage d'un nombre candidat au suivant comporte l'ajout (46'), aux nombres candidat et témoin courants, d'un multiple ((e.r₁.A₂+1).A₁) dudit premier produit A₁, le coefficient multiplicateur étant fonction au moins d'un nombre aléatoire r₂ et d'un second produit A₂ des nombres premiers bᵢ compris entre les premier n₁ et second n₂ seuils.

6. Procédé selon la revendication 5, dans lequel ledit coefficient multiplicateur est en outre fonction d'un exposant public e de l'algorithme RSA.

7. Procédé selon l'une quelconque des revendications 3 à 6, dans lequel la table crible [ST] est basée sur les nombres témoin w.

8. Procédé selon l'une quelconque des revendications 3 à 7, dans lequel la table crible [ST] est, à chaque nouveau nombre candidat a, mise à jour en ajoutant à chacun de ses éléments ledit premier produit A₁, modulo l'élément concerné bᵢ.

9. Procédé selon l'une quelconque des revendications 1 à 8, dans lequel chaque nombre candidat a est soumis, avant le test de primalité basé sur des calculs d'exponentiation modulaire (38), à un test (37) de conformité par rapport à un exposant public e de l'algorithme RSA.

10. Procédé selon l'une quelconque des revendications 1 à 9, dans lequel le test de primalité (38) basé sur des calculs d'exponentiation modulaire est un test Miller-Rabin.

11. Circuit électronique comportant des moyens pour la mise en oeuvre du procédé conforme à l'une quelconque des revendications 1 à 10.

## Patentansprüche

1. Ein Verfahren zum Absichern einer Generierung von mindenstens einer Primzahl p durch eine elektronische Schaltung (1), und zwar durch Testen der Primzahleigenschaft von aufeinanderfolgenden Kandidatenzahlen a, wobei das Verfahren Folgendes aufweist:
für jede Kandidatenzahl:
EHe Bechnung (41, 46) einer Referenzzahl w, die mindestens eine erste Zufallszahl r₂ einbezieht; und
mindestens einen Primzahltest (38) basierend auf modularexponentiellen Berechnungen; und
für eine Kandidatenzahl, die erfolgreich den Primzahltest bestanden hat:
einen Konsistenztest (44) zwischen der Kandidatenzahl und ihrer Referenzzahl, um die Integrität des Kandidaten in Bezug auf den Beginn der Berechnung zu überprüfen.

2. Verfahren nach Anspruch 1, wobei die Referenzzahl w erlangt wird durch Subtrahieren von der oder durch Addieren auf die Kandidatenzahl a, und zwar einer Quantität, die von der ersten Zufallszahl r₂ abhängt.

3. Verfahren nach Anspruch 2, wobei jede Kandidatenzahl vor dem Primzahltest basierend auf modularexponentiellen Berechnungen mindestens einem Primzahltest basierend auf einer Siebtabelle [ST] vorgelegt wird, wobei die Siebtabelle so viele Elemente hat, wie es Primzahlen bᵢ zwischen einem ersten Schwellenwert n₁ und einem zweiten Schwellenwert n₂ gibt, wobei eine anfängliche Kandidatenzahl erlangt wird, und zwar durch Multiplizieren einer beliebigen Zahl k mit einem ersten Produkt A₁ der Primzahlen, die kleiner als der erste Schwellenwert sind.

4. Verfahren nach Anspruch 3, wobei Wechseln von einer Kandidatenzahl zur nächsten Addieren (46) des ersten Produkts A₁ auf die aktuelle Kandidaten- und Referenzzahlen aufweist.

5. Verfahren nach Anspruch 3, wobei Wechseln von einer Kandidatenzahl zur nächsten Addieren (46') eines Vielfachen (e.r₁.A₂+1).A₁ des ersten Produkts A₁ auf die aktuelle Kandidaten- und Referenzzahlen aufweist, wobei der Multiplikator eine Funktion von mindestens einer Zufallszahl r₂ und einem zweiten Produkt A₂ der Primzahlen bᵢ ist, die zwischen dem ersten Schwellenwert n₁ und zweiten Schwellenwert n₂ liegen.

6. Verfahren nach Anspruch 5, wobei der Multiplikator ferner eine Funktion eines öffentlichen Exponenten e des RSA Algorithmus ist.

7. Verfahren nach einem der Ansprüche 3 bis 6, wobei die Siebtabelle [ST] auf den Referenzzahlen w basiert.

8. Verfahren nach einem der Ansprüche 3 bis 7, wobei die Siebtabelle [ST], zum Beispiel für eine neue Kandidatenzahl a, aktualisiert wird durch Addieren jedes ihrer Elemente mit dem ersten Produkt A₁ modulo des betreffenden Elements bᵢ.

9. Verfahren nach einem der Ansprüche 1 bis 8, wobei jede Kandidatenzahl a vor dem Primzahltest basierend auf modularexponentiellen Berechnungen (38) einem Test (37) von Übereinstimmung mit einem öffentlichen Exponenten e des RSA Algorithmus vorgelegt wird.

10. Verfahren nach einem der Ansprüche 1 bis 9, wobei der Primzahltest (38) basierend auf modularexponentiellen Berechnungen ein Miller-Rabin Test ist.

11. Eine elektronischer Schaltung, die Mittel zum Umsetzen des Verfahrens nach einem der Ansprüche 1 bis 10 aufweist.

## Claims

1. A method for protecting a generation, by an electronic circuit (1), of at least one prime number p by testing the primality of successive candidate numbers a, comprising:
for each candidate number:
the calculation (41, 46) of a reference number w involving at least one first random number r₂; and
at least one primality test (38) based on modular exponentiation calculations; and
for a candidate number having successfully passed said primality test:
a test of consistency (44) between the candidate number and its reference number to check the integrity of the candidate with respect to the beginning of the calculation.

2. The method of claim 1, wherein the reference number w is obtained by subtracting from or by adding to the candidate number a a quantity depending on said first random number r₂.

3. The method of claim 2, wherein each candidate number is submitted, before the primality test based on modular exponentiation calculations, to at least one primality test based on a sieve table [ST] comprising as many elements as there are prime numbers bi between a first threshold n₁ and a second threshold n₂, an initial candidate number being obtained by multiplying an arbitrary number k by a first product A₁ of the prime numbers smaller than the first threshold.

4. The method of claim 3, wherein passing from one candidate number to the next one comprises adding (46), to the current candidate and reference numbers, said first product A₁.

5. The method of claim 3, wherein passing from one candidate number to the next one comprises adding (46'), to the current candidate and reference numbers, a multiple (e.r₁.A₂+1).A₁ of said first product A₁, the multiplier being a function of at least one random number r₂ and a second product A₂ of the prime numbers bᵢ ranging between the first n₁ and second n₂ threshold.

6. The method of claim 5, wherein said multiplier further is a function of a public exponent e of the RSA algorithm.

7. The method of any of claims 3 to 6, wherein the sieve table [ST] is based on the reference numbers w.

8. The method of any of claims 3 to 7, wherein the sieve table [ST] is, for example new candidate number a, updated by adding to each of its elements said first product A₁ modulo the concerned element bᵢ.

9. The method of any of claims 1 to 8, wherein each candidate number a is submitted, before the primality test based on modular exponentiation calculations (38), to a test (37) of compliance with a public exponent e of the RSA algorithm.

10. The method of any of claims 1 to 9, wherein the primality test (38) based on modular exponentiation calculations is a Miller-Rabin test.

11. An electronic circuit comprising means for implementing the method of any of claims 1 to 10.
